(19) Europäisches Patentamt
European Patent Office
Office européen des brevets

(11) **EP 2 921 817 A1**

(12) # EUROPEAN PATENT APPLICATION

(43) Date of publication:
**23.09.2015 Bulletin 2015/39**

(51) Int Cl.:
***G01B 11/16*** *(2006.01)*

(21) Application number: **15159640.0**

(22) Date of filing: **18.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.03.2014 PT 10753114**

(71) Applicant: **STMV - Sistema de Monitorizacao de Velas, Lda.**
**2400-441 Leiria (PT)**

(72) Inventors:
• **Do Vale Rocha, Vitor Hugo Simao**
  **8000-355 FARO (PT)**
• **Moura Pinto, Pedro**
  **8500-555 PORTIMÃO (PT)**
• **De Sá Caetano, Elsa**
  **4100-053 PORTO (PT)**
• **Marques De Queirós Ferreira, Pedro Gil**
  **4400-478 VILA NOVA GAIA (PT)**

(74) Representative: **Ferreira, Maria Silvina**
**Clarke, Modet & Co.**
**Rua Castilho, 50-9°**
**1269-163 Lisboa (PT)**

(54) **Real-time shape measuring method and system**

(57)    The present application intends to provide real-time feedback about mechanical shapes in a boat with at least one sail.

Disclosed are a method and system for acquiring sensor data about mechanical shapes using at least one pair of parallel optical fibers with shape sensors (1), a data processing system comprising an optical fiber interrogator device (2) and an electronic unit for calculating a curvature in a sensing location with the difference between two parallel strain measurements, and estimating a geometric shape of a strained path. In one embodiment, the electronic unit transmits geometric shape indicator information of a strained length via cable or wirelessly to a wireless handheld device (3).

The disclosed shape measuring system can be used in a boat with at least one sail for feedback about the shape of the sail.

Fig. 1

**Description**

**Technical Field**

The present application relates to a real-time shape measuring system in a boat with at least one sail.

**Background**

A Fiber Bragg Grating (FBG) is a short segment of optical fiber that reflects particular wavelengths of light and transmits all others. The fundamental principle behind the operation of a FBG is Fresnel reflection, where light traveling between media of different refractive indices may both reflect and refract at the interface. This solution overcomes the disadvantages of sail vision systems.

FBG sensors are made by laterally exposing the core of a single-mode fiber to a periodic pattern of intense ultraviolet light. The exposure produces a permanent increase in the refractive index of the fiber's core, creating a fixed index modulation according to the exposure pattern. This fixed index modulation is called a grating.

At each periodic refraction change, a small amount of light is reflected. All the reflected light signals combine coherently to one large reflection at a particular wavelength when the grating period is approximately half the input light's wavelength. This is referred to as the Bragg condition, and the wavelength at which this reflection occurs is called the Bragg wavelength. Light signals at wavelengths other than the Bragg wavelength, which are not phase matched, are essentially transparent. Therefore, light propagates through the grating with negligible attenuation or signal variation. Only those wavelengths that satisfy the Bragg condition are affected and strongly back-reflected. The ability to accurately preset and maintain the grating wavelength is a fundamental feature and advantage of fiber Bragg gratings.

The central wavelength of the reflected component satisfies the Bragg relation:

$$\lambda_{refl} = 2n\Lambda \qquad\qquad (\text{I})$$

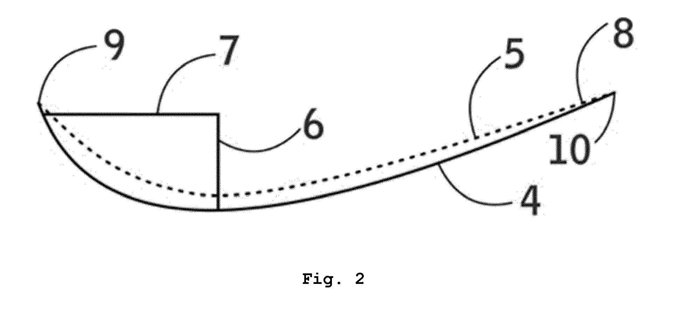

where n is the index of refraction and $\Lambda$ is the period of the index of refraction variation of the FBG. Due to the temperature and strain dependence of the parameters n and $\Lambda$, the wavelength of the reflected component will also change as function of temperature and/or strain, see Figure 2. This dependency is well known what allows determining the temperature or strain from the reflected FBG wavelength.

FBG based sensors prove especially useful wherever conventional measurement equipment meets its limits, for example in harsh environment such as environments with electromagnetic interference or fields with high energetic potential (e.g. high voltage). Optical strain gauges offer additional benefits over conventional, electrical strain gauges, because of the small mass of the connection leads and the reduced wiring effort resulting from the manifold of the measuring points. As well as being sensitive to strain, an FBG sensor is also sensitive to temperature, vibration/frequencies or acceleration. For all these reasons, FBG sensors are suitable for being used in many technical fields.

One shape measuring solution known is the optical fiber sensor system developed by neXtSail™ Systems, particularly focused in sail shape measuring. This system uses optical fiber with 250 $\mu$m in diameter and FBG sensors, allowing for real-time monitoring of strain and 3D profiles of the sail. Due to the fact that only one optical fiber filament is used and only the strain in the area of the FBG sensor is measured, the disclosed system can only measure the strain in each sensor. This system does not achieve the measurement or estimation of a shape when multiple sensors are involved.

Document US 7,520,176 B1 discloses a method to obtain displacement of a structure having a depth with a neutral axis and length. Moreover, document US 2010/0215311 A1 discloses a method and apparatus for determining a three-dimensional (3D) shape of an optical fiber cable having an optical fiber with a plurality of light-guiding cores i.e. multi-core optical fiber, the optical fiber being circumscribed by a protective sleeve with respect to which the optical fiber is allowed to freely twist and untwist along an interface therewith.

The known systems do not disclose a system suitable for reading the shape. Also, it would be impossible to use such systems to measure, in one embodiment, a sail, due to the high cost that would be involved.

**General description**

The present application intends to solve the problem of providing real-time feedback about a mechanical shape.

Disclosed is a data processing system for real-time shape measuring in a boat with a least one sail, which comprises:

- an optical fiber interrogator device (2) configured for collecting measurements from at least one pair of parallel optical fibers with at least five sensing locations along the length, where each sensing location provides two parallel strain measurements from a Fiber Bragg Grating (FBG) sensor in each optical fiber; and

- an electronic unit comprising processing means configured for:

  - calculating a curvature in a sensing location with the difference between two parallel strain measurements; and

  - estimating at least one geometric shape indicator of a strained length.

In order to estimate a shape along a path, at least one pair of parallel optical fibers is used with homogeneously spaced sensing locations comprising strain sensors. In order to measure the curvature at each sensed location, all sensor measurements from one optical fiber are compared with its corresponding sensors in the opposite optical fiber.

The present application also discloses a method for real-time shape measuring in a boat with a least one sail which comprises the steps of:

- collecting measurements from at least five sensing locations in a length, where each sensing location provides two parallel strain measurements;

- calculating a curvature in a sensing location based on the difference between two parallel strain measurements;

- estimating at least one geometric shape indicator of a strained length.

Collecting measurements in at least one homogeneously spaced location along the optical fiber pair path, allows measuring strain in specific points from which coordinates of the strained path are analyzed using an estimation approach.

In a first stage the strain in all sensing locations is collected and analyzed, in order to calculate the exact curvature at each point of the path. This is achieved by calculating the strain difference between both sensors in each sensing location. In a second stage, the strain curvature is calculated and estimated in order to recreate the curvature between sensors. A person skilled in the art can implement the second stage using an estimation approach in 2 dimensions, e.g. using large-displacement theory methodologies where small strains and large rotations and displacements are assumed.

The main advantageous effect from the present application relates to the relation between the low number of FBG sensors required along the optical fiber pair path of the system and the resulting measurement precision: 1 % error in depth and 0.1% in the optical fiber pair path length. These results are obtained with at least 5 FBG sensor pairs along the fiber optical pair path.

A high level of precision is achieved using few sensors and a method to process the shape of the sail where no sensors are available.

The system disclosed in the present application provides real-time feedback about a mechanical shape and allows for sailors and trimmers to take a boat to its maximum speed with the ideal shape.

**Brief description of drawings**

Without intent to limit the disclosure herein, this application presents attached drawings of illustrated embodiments for an easier understanding.

Fig. 1 illustrates one embodiment of a data processing system in a sailboat, where the reference numbers show:

1 - optical fibers with shape sensors;
2 - an optical fiber interrogator device; and
3 - a wireless handheld device.

Fig. 2 illustrates a set of measurements presented for an embodiment, where the reference numbers show:

4 - real sail shape;
5 - ideal sail shape;
6 - depth;
7 - draft;

8 - twist;

9 - entry angle; and

10 - exit angle.

Fig. 3 illustrates an embodiment of the interrogator device, where the reference numbers show:

13 - optical channels.

Fig. 4 illustrates an embodiment in three different strain configurations, where the reference numbers show:

101 - fixing point of the exit angle;

102 - fixing point of the entry angle;

110 - configuration with 7 cm in depth;

120 - configuration with 9 cm in depth; and

130 - configuration with 16 cm in depth.

Fig. 5 illustrates the experimental error in configuration with 7 cm in depth (110).

Fig. 6 illustrates the experimental error in configuration with 9 cm in depth (120).

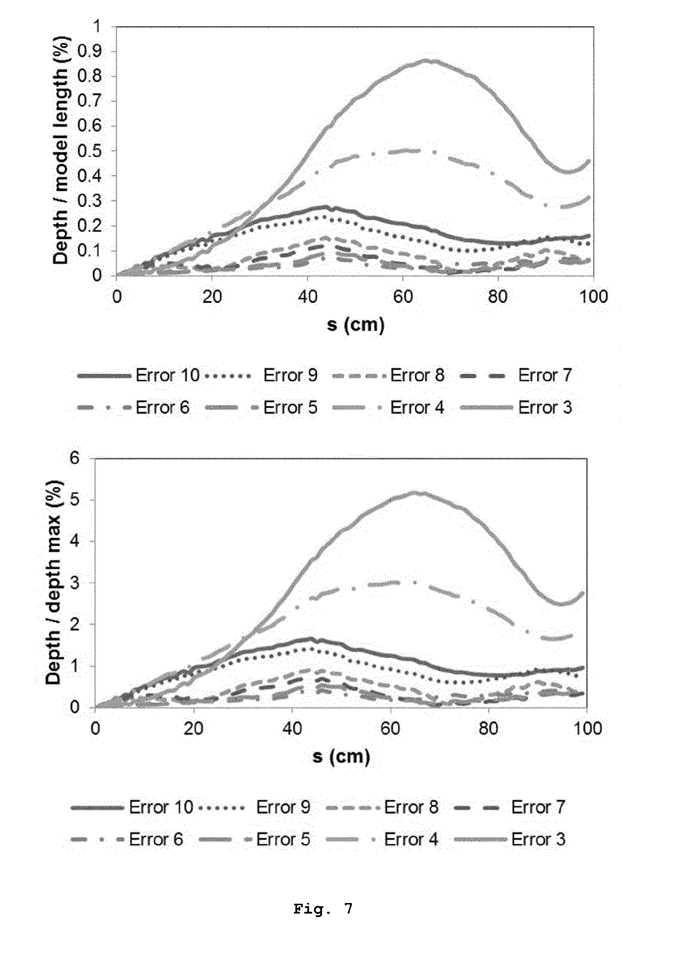

Fig. 7 illustrates the experimental error in configuration with 16 cm in depth (130).

Fig. 8 illustrates the experimental error in configuration with 16 cm in depth (130) when temperature changes 12°C.

**Description of embodiments**

Referring to the drawings, herein are described optional embodiments in more detail, which however are not intended to limit the scope of the present application.

In one embodiment, the real-time shape measuring method and system are used in a sail. The great depth of a sail should be in the middle, and the curvature is almost linear. Furthermore, there is a possibility of having "backwind", which is a counter curvature in the first half. With 5 sensing locations it is also possible to calculate the position and amount of backwind. With less than 5 locations, it can't be so precise.

In another embodiment, the shape measuring system disclosed can be further used in sailboats for acquiring feedback about the shape of masts or the hull.

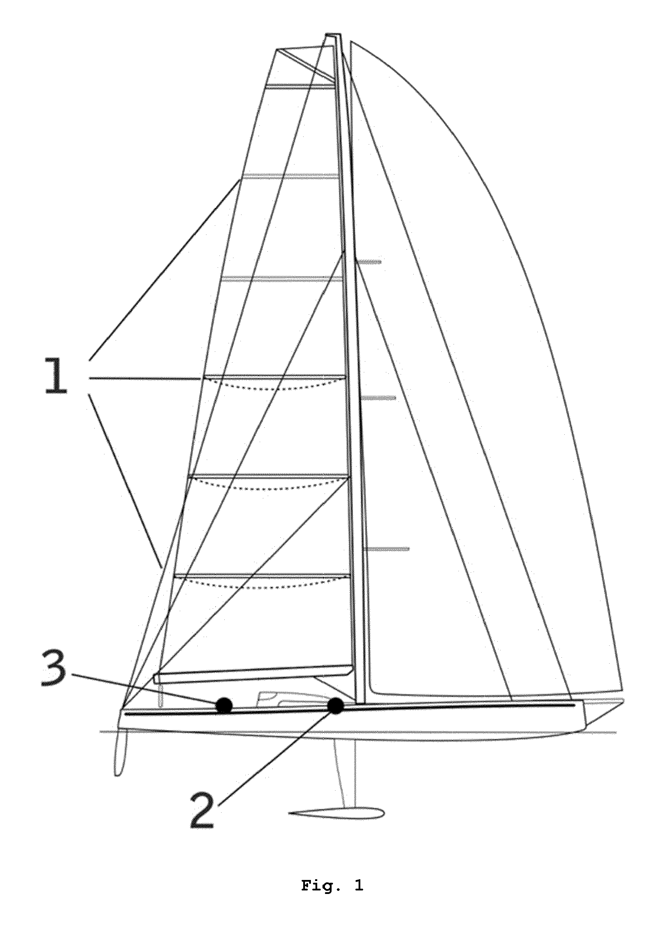

Figure 1 illustrates an embodiment of a data processing system in a sailboat. Optical fibers with measuring shape sensors (1) are horizontally located in the sail, in order to measure the horizontal profile of the sail, and connected to an interrogator device (2). This interrogator device (2) transmits the shape measurements data to an electronic unit which estimates at least one geometric shape indicator of a strained length. In one further embodiment, the electronic unit transmits the estimated data through cable or wireless communication means directly to the boat electronics or a web application. The data can be presented in real-time in a mobile device, for example a wireless handheld device (3), and updated every second. In one embodiment, an alert is issued every time the sail doesn't present the desired shape.

In one embodiment, the data processing system comprises:

- an electronic unit further comprising communication means configured for transmitting geometric shape indicator information of a strained length; and
- a computational device configured to receive said information.

In another embodiment, the data processing system comprises:

- an electronic unit comprising processing and wireless communication means configured for transmitting geometric shape indicator information of a strained length wirelessly; and

- a wireless handheld device configured to receive said information wirelessly.

In a further embodiment, the data processing system comprises:

- an electronic unit memory means further configured for defining a desired range for at least one geometric shape indicator and generating a signal when the transmitted geometric shape indicator is outside a defined desired range for that said indicator;

- a computational device configured to handle said signal.

Figure 2 illustrates a set of measurements for an embodiment in a sailboat. Measures about the real sail shape (4) are acquired, in order to provide real-time feedback for the maneuvering of the boat and achieving an ideal sail shape (5). In one embodiment, the measurements provided are depth (6), draft (7), twist (8), entry angle (9) and exit angle (10).
In one embodiment, the method further comprises a step for transmitting geometric shape indicator information of a strained length.
In another embodiment, the step for transmitting geometric shape indicator information of a strained length, comprises transmitting geometric shape indicator information of a strained length wirelessly.
In a further embodiment, the method further comprises the steps of:

- defining a desired range for at least one geometric shape indicator; and

- generating a signal when the transmitted geometric shape indicator is outside a defined desired range for that said indicator.

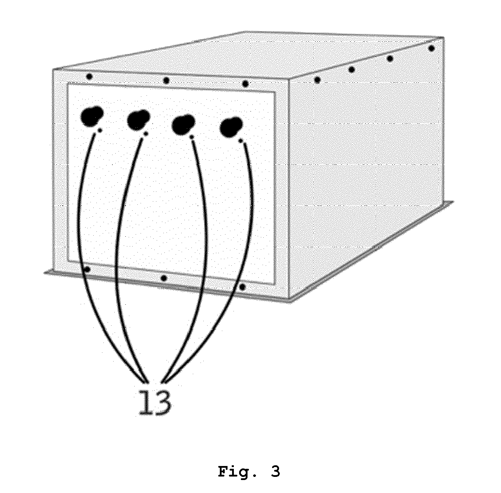

Figure 3 illustrates an embodiment of the interrogator device which employs continuous swept laser scanning technology. It comprises a National Institute of Standards and Technology (NIST) traceable wavelength reference that provides continuous calibration to ensure system accuracy over long term operation. The high dynamic range and output power allow high resolution to be attained even for long fiber leads and lossy connections.
In one embodiment, the interrogator device collects one sample per second in the range of 100 nm with a resolution of 5 pm. The Optical Spectrum Analyzer trace is continuous using a full spectrum trace with 0.2 million points acquired over the 100 nm range. The interrogator device also has a sleep mode and local data logging.

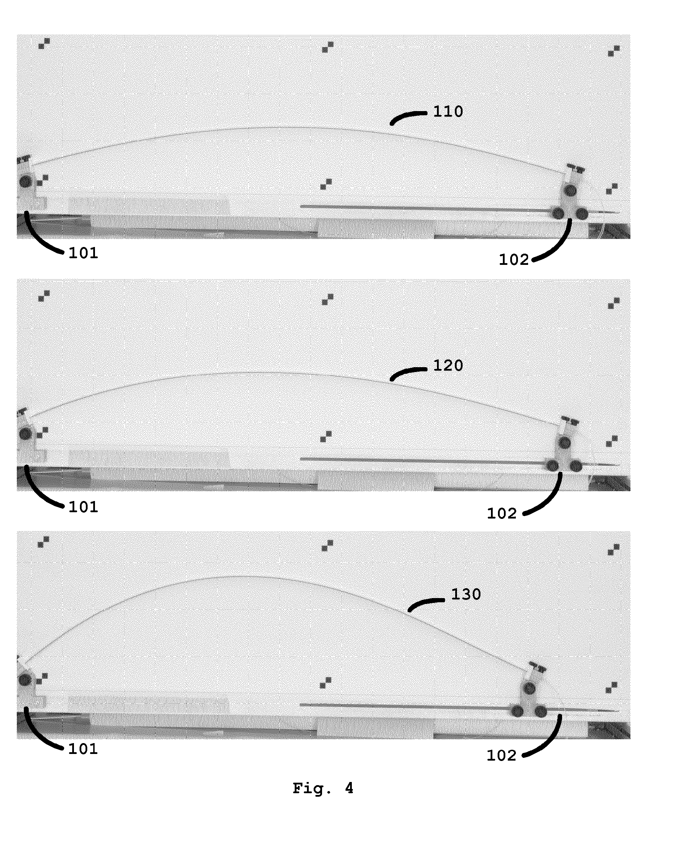

Figure 4 illustrates an embodiment in three different configurations. This embodiment allows to experimentally validate the results processed from an embodiment with optical fibers against results processed from image analysis. Two fixing points, at the exit angle (101) and at the entry angle (102), were used to mechanically strain the optical fibers. The three different configurations were defined for different depths: 7 cm (110); 9 cm (120); and 16 cm (130).

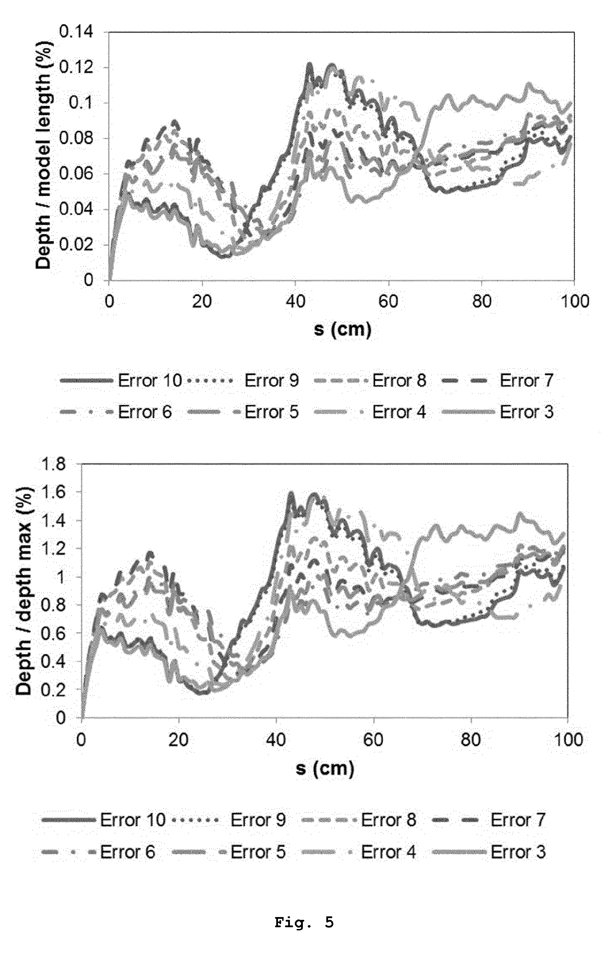

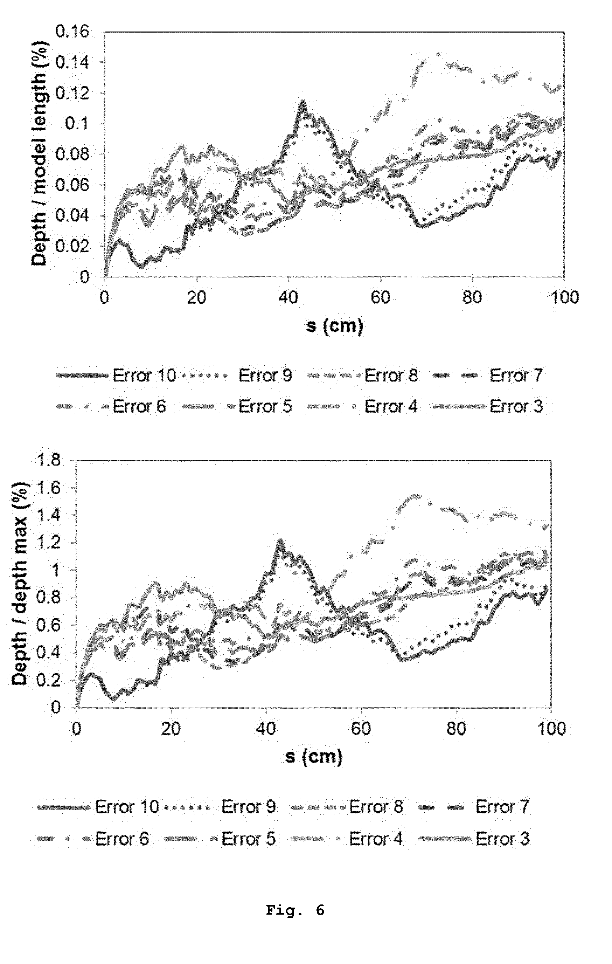

Figures 5, 6 e 7 present the errors obtained for the three configurations 110, 120 and 130, respectively. With five sensing locations along the optical fiber path are sufficient to achieve an error of 1% in depth and 0.1% in length. The errors in the exit and entry angles are higher.

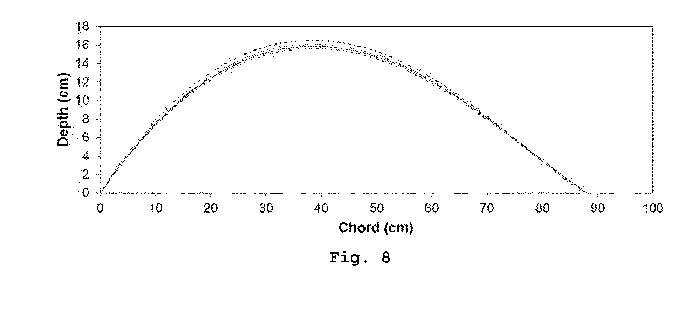

Figure 8 illustrates the experimental error in configuration 130 when temperature changes 12° C. The error does not significantly influence precision when different temperatures are applied in each sensor.
Naturally, the present embodiments are not in any way limited to the embodiments described in this document and a person with average knowledge in the field will be able to predict many possible changes to it without deviating from the main idea, as described in the claims.

**Claims**

1.  A method for real-time shape measuring in a boat with a least one sail, comprising the steps of:

    - collecting measurements from at least five sensing locations in a length, where each sensing location provides two parallel strain measurements;
    - calculating a curvature in a sensing location based on the difference between two parallel strain measurements;
    - estimating at least one geometric shape indicator of a strained length.

2.  A method according to the previous claim, further comprising a step for transmitting geometric shape indicator information of a strained length.

3.  A method according to the previous claim, wherein the step for transmitting geometric shape indicator information of a strained length, comprises transmitting geometric shape indicator information of a strained length wirelessly.

4.  A method according to any of the previous claims, further comprising the steps of:

    - defining a desired range for at least one geometric shape indicator; and
    - generating a signal when the transmitted geometric shape indicator is outside a defined desired range for that said indicator.

5. A data processing system for real-time shape measuring in a boat with a least one sail comprising:

- an optical fiber interrogator device (2) configured for collecting measurements from at least one pair of parallel optical fibers with at least five sensing locations along the length, where each sensing location provides two parallel strain measurements from a Fiber Bragg Grating (FBG) sensor in each optical fiber; and
- an electronic unit comprising processing means configured for:

- calculating a curvature in a sensing location with the difference between two parallel strain measurements; and
- estimating at least one geometric shape indicator of a strained length.

6. A data processing system according to the previous claim, comprising:

- an electronic unit further comprising communication means configured for transmitting geometric shape indicator information of a strained length; and
- a computational device configured to receive said information.

7. A data processing system according to the previous claim, comprising:

- an electronic unit comprising processing and wireless communication means configured for transmitting geometric shape indicator information of a strained length wirelessly; and
- a wireless handheld device configured to receive said information wirelessly.

8. A data processing system according to any of the claims 5 to 7, comprising:

- an electronic unit memory means further configured for defining a desired range for at least one geometric shape indicator and generating a signal when the transmitted geometric shape indicator is outside a defined desired range for that said indicator;
- a computational device configured to handle said signal.

Fig. 1

Fig. 2

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 15 15 9640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 400 171 A (INSENSYS LTD [GB]) 6 October 2004 (2004-10-06) * abstract; figures 3,4a,4b * * page 6, line 4 - page 7, line 12 * | 1-8 | INV. G01B11/16 |
| X | US 2006/013523 A1 (CHILDLERS BROOKS A [US] ET AL) 19 January 2006 (2006-01-19) * abstract; figures 1-4 * * figures 1-4 * * paragraphs [0032] - [0042] * | 1-8 | |
| X,D | US 2010/215311 A1 (MOORE JASON P [US]) 26 August 2010 (2010-08-26) * abstract; figures 1,2 * * paragraphs [0017] - [0021], [0028] - [0038] * | 1-8 | |
| A | WO 2008/062392 A2 (INTUNE TECHNOLOGIES LTD [IE]; FARRELL THOMAS [IE]; LEVINS JOHN [IE]; T) 29 May 2008 (2008-05-29) * the whole document * | 1-8 | |

TECHNICAL FIELDS
SEARCHED     (IPC)

G01B

The present search report has been drawn up for all claims

| Place of search | Date of completion of the search | Examiner |
|---|---|---|
| Munich | 26 June 2015 | Passier, Martinus |

EPO FORM 1503 03.82 (P04C01)

**ANNEX TO THE EUROPEAN SEARCH REPORT
ON EUROPEAN PATENT APPLICATION NO.**

EP 15 15 9640

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2015

| Patent document cited in search report | | Publication date | Patent family member(s) | | Publication date |
|---|---|---|---|---|---|
| GB 2400171 | A | 06-10-2004 | NONE | | |
| US 2006013523 | A1 | 19-01-2006 | NONE | | |
| US 2010215311 | A1 | 26-08-2010 | US<br>WO | 2010215311 A1<br>2010096409 A1 | 26-08-2010<br>26-08-2010 |
| WO 2008062392 | A2 | 29-05-2008 | EP<br>US<br>WO | 2084506 A2<br>2010140462 A1<br>2008062392 A2 | 05-08-2009<br>10-06-2010<br>29-05-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7520176 B1

- US 20100215311 A1